# EUROPEAN PATENT SPECIFICATION

(11) **EP 3 071 891 B1**
(45) Date of publication and mention of the grant of the patent: **24.04.2019**
(21) Application number: 14806340.7
(22) Date of filing: 07.11.2014
(51) Int. Cl.: F24D 19/00, C02F 5/02, C02F 5/08

(54) **A HEAT TRANSFER SYSTEM AND A METHOD OF ITS OPERATION**
EIN WÄRMEÜBERTRAGUNGSSYSTEM UND EIN VERFAHREN ZU DESSEN BETRIEB
SYSTÈME DE TRANSFERT DE CHALEUR ET PROCÉDÉ POUR SON OPÉRATION

(30) Priority: 07.11.2013 GB 201319645
(43) Date of publication of application: 28.09.2016
(73) Proprietor: Sentinel Performance Solutions Ltd, Daresbury Warrington Cheshire WA4 4BS (GB)
(72) Inventor: DAY, Paul, 2000 Antwerp (BE)
(74) Representative: Badger, John Raymond
(86) International application number: PCT/GB2014/000451
(87) International publication number: WO 2015/067917

(56) References cited:
- WO-A1-2008/064708
- DE-A1-102007 055 132
- DE-U1-202013 005 919

## Description

This invention relates to the monitoring and operation of a liquid flow circuit, such as the closed circuit of a central heating or cooling system, in which the circulated liquid, typically water or a water-based liquid, contains a chemical additive such as an additive selected to inhibit corrosion within the system and or the formation of scale deposits which potentially would reduce the efficiency of the system.

Additionally the invention may comprise monitoring and operation of a liquid flow circuit, and commissioning of a liquid flow circuit, in which a cleaning fluid or fluid for a flushing procedure is circulated through the liquid flow circuit. Thus the present invention encompasses the monitoring and operation of a liquid flow circuit when that circuit contains a flushing fluid or a temporary chemical additive, such as may be employed for cleaning, or a substantially permanent additive provided to inhibit corrosion.

Thus the liquid flow circuit may be that of a system which comprises a heat source such as a boiler and one or more heat emitting units such as radiators, or which is a cooling system comprising one or more heat extraction units.

A feature of closed circuit type heating and cooling systems is that it is necessary to fully or partially drain the system in the event of a system component, such as a central heating boiler, a radiator or heat extraction unit needing to be removed or replaced.

A problem which then arises is that often the system is re-filled or topped up only with water and lost inhibitor is not replaced. Thus the system is then operated without any inhibitor in the case of a system that has been fully drained, or with only an excessively diluted solution in the case of a system which has been partially drained. In either case the system components are then exposed to a heightened risk of corrosion and or scale formation.

One proposal for a heat transfer system which seeks to improve on hitherto known heat transfer systems is described in the document DE 20 2013 005919 U1.

In that document there is disclosed a heat transfer system comprising a liquid flow circuit within which a liquid containing a chemical additive is circulated to flow through one or more heat transfer devices, said circuit comprising a sensor operable to provide an output signal in the event of a liquid flow into the liquid flow circuit subsequent to initial filling of the liquid flow circuit.

Another prior art proposal is set forth in WO 2008/064708. This relates to a water treatment unit for a heating system having a container through which water flows. The container incorporates ion exchange elements that demineralise the water. It is stated that with the described arrangement a heating contractor can easily fill small and medium sized heating systems with demineralised water.

The present invention seeks to provide a method and apparatus which addresses and seeks to overcome or mitigate the aforedescribed problem associated with a heating or cooling system (hereinafter referred to as a heat transfer system) of the type which comprises a liquid flow circuit of the kind which is intended to operate with a chemical additive such as an inhibitor.

In accordance with one aspect of the present invention there is provided a heat transfer system as defined in claim 1.

In accordance with another aspect of the present invention there is provided a method of operation of a heat transfer system of the type comprising a liquid flow circuit within which there is circulated a liquid containing a chemical additive, said method being a method as defined in claim 11.

The system and method of the present invention is particularly applicable to the heat transfer system of a building or other spatially fixed environment. It is particularly directed to a system and method wherein the system may be permanently or substantially permanently connected to a supply of liquid for filling and/or topping up of the system. The system may be permanently or substantially permanently connected to a supply of pressurised liquid for filling and or topping up of the system in a manner in which filling and/or topping up occurs automatically, or, alternatively, manual means, such as a manually operated valve or connection may be provided for manual control of admission of filling and/or topping up liquid to the liquid flow circuit.

Preferably the sensor is operable to provide an output signal which is a function of the volume of liquid flow into the liquid flow circuit.

The monitoring device may be pre-programmed to store information regarding an acceptable concentration of the chemical additive and to display the required quantity of chemical additive that should be introduced into the system following initial filling of the system in order to achieve an acceptable concentration of additive.

The volume flow display may display the volume of liquid, typically water, which has entered the liquid flow circuit during initial filling of the liquid flow circuit when commissioning the system, or during a subsequent topping up of the system, whereby said volume information may be employed to enable a correct amount of chemical additive to be introduced into the liquid flow circuit to provide an acceptable concentration of chemical additive within the liquid flow circuit.

The sensor may have associated therewith re-set means whereby following addition of chemical additive to the liquid flow circuit the display may be re-set, e.g. zeroed, thereby to display only the volume of liquid entering the liquid flow circuit subsequent to an addition of chemical additive.

The chemical additive may be introduced into the liquid flow circuit at a position upstream of the sensor whereby, particularly in the case of a liquid chemical additive introduced into a water filled circuit, the sensor may detect flow of water into the circuit and also flow of liquid chemical additive.

Alternatively, however, the chemical additive may be introduced into the liquid flow circuit at a position downstream of the sensor whereby, particularly in the case of a liquid chemical additive introduced into a water-filled circuit, the sensor detects only the flow of water into the circuit and not the flow of liquid chemical additive.

The monitoring device comprising the sensor may be in communication with, or adapted for communication with a dosing device which is operable to introduce chemical additive into the liquid flow circuit. The monitoring device may be operable to provide information to the dosing device relating to the required quantity of chemical additive to be introduced into the liquid flow circuit and/or the monitoring device may be operable to receive information from the dosing device in respect of the quantity of chemical additive that has been introduced into the liquid flow circuit. The dosing device may be operable automatically to introduce chemical additive into the liquid flow circuit in response to a signal from the monitoring device or it may be manually operable.

The dosing device may incorporate or be responsive to software which is substantially integral with that of the monitoring device.

The monitoring device may be operable for example to require the sequential operations of draining and/ or filling the liquid flow circuit, adding a correct amount of cleaning fluid, circulating the cleaning fluid, draining, flushing, re-filling and then adding a correct amount of chemical inhibitor, or require at least two or more of said operational steps.

The monitoring device may comprise a data store which records a history of operation undertaken in respect of flow of liquid, such as water, into the liquid flow circuit, and/or introduction of chemical additive. If the dosing device is not in direct communication with the monitoring device, the monitoring device may comprise a data input facility whereby information may be entered manually in respect of the quantity of chemical additive which has been introduced into the liquid flow circuit.

In the specification of our UK patent GB 2462518 there is described in relation to in-line testing for inhibitor concentration procedural steps for guiding or controlling operations required during a commissioning procedure. Similar procedural steps may be employed in the context of the present invention but involving the detecting of flow volumes instead of the technique described in GB 2462518 of employing tracer chemicals.

Following initial commissioning of a heat transfer system the sensor may be employed to monitor small additions of water to the liquid flow circuit and to provide a signal indicative of a requirement for chemical inhibitor addition when cumulative losses of liquid (whether water or inhibitor) have reached a pre-defined level. When that pre-defined level is reached the system, for example a monitoring device, may provide an alarm signal to indicate the need for the introduction of chemical inhibitor or a dosing device may be caused automatically to introduce additional chemical inhibitor into the liquid flow circuit. Preferably the system is operable to determine the top-up quantity of chemical additive that requires to be introduced into the liquid flow circuit and either to display that quantity or automatically cause operation of a dosing device to introduce that quantity of chemical additive into the liquid flow circuit.

Particularly but not exclusively in the case of automatic operation of a dosing device preferably an alarm function is provided whereby a visual or audible alarm is generated in the event of the dosing device not containing any, or containing only insufficient chemical additive needed to restore the concentration of additive to the required level of concentration.

The heat transfer system may comprise a monitoring device which monitors the rate of addition of system water or other liquid (and thus by inference the rate of water lost) per unit time thereby to identify a persistent leak of fluid from the system and to raise an alarm signal which may be independent from any other programmed alarm systems and settings. The system may comprise means operable automatically or manually in response to an alarm signal for introduction of a leak sealing chemical into the liquid flow circuit.

The heat transfer system additionally may comprise a pressure monitor which is operable to initiate an alarm signal in the event of a significant loss of pressure which is indicative of a malfunction. The heat transfer system may comprise a valve operable to inhibit introduction of water or other liquid, or chemical additive into the system in the event of a substantial drop of pressure which is indicative of a major loss of liquid from the system.

Examples of alarm and other functions which may be incorporated into the heat transfer system include:-
After filling, but before addition of inhibitor, a status alarm on a monitoring device, such as a red LED, may be displayed, and arranged to turn green, or some other colour when the correct amount of inhibitor has been added.
A monitoring device which provides a display or other form of alarm when chemical inhibitor needs to be added to the system, and preferably the monitoring device displays the measured system volume as determined during initial commissioning thereby to allow an operator or householder to calculate manually and add the correct amount of inhibitor. The monitoring device may enable the calculated amount of inhibitor to be entered and then confirmed by the monitoring device as being correct, or alternatively the monitoring device may display the required quantity of inhibitor to be added to the system.
The system water treatment history may be displayed directly on a display associated with the monitoring device or on another device which is physically or electronically associated with the sensor and an alarm may be generated in the event of any detected malfunction.
Remote monitoring whereby the alarm state information is transmitted to a remote observer via one or more of known types of communication protocols such as WiFi or the Internet. The alarm state information may be integrated into other software solutions to trigger rectifying actions, for example automatically to initiate attendance of a service engineer.
The monitoring device may display the water treatment history thereby to allow the householder or service provider to undertake their own diagnosis or follow suggested rectification actions following operation of an alarm.
The monitoring device may be in communication with a central heating boiler to prompt required action from the boiler, for example to prompt operation of a circulation pump, provided integrally with the boiler, at the time of or following addition of a cleaner or inhibitor to the liquid flow circuit.
The output signal may be in the form of a warning signal which acts as an alarm, whether visual or audible, to alert a user to the need to replenish the system with chemical additive, for example a liquid chemical additive such as a liquid inhibitor.
The monitoring device may be in communication with a central heating boiler to cause either shutting down of the boiler or reduction of the heat output of the boiler in the event that any required maintenance or other corrective action has not been undertaken, for example within a prescribed time period.

The heat transfer system may be of the type comprising a closed circuit containing liquid at above atmospheric pressure, or it may be of an open, unpressurised type.

The dosing device, irrespective of whether it is responsive to an output signal from the sensor, may be of a type which interacts with the sensor to cause resetting of the sensor and an alarm function following operation of the dosing device to inject replenishment chemical into the system.

The dosing device may be of a kind comprising the combination of an inlet port in fluid communication with the liquid flow circuit and a container of replenishment chemical secured to or adapted to be secured to the inlet port.

Preferably the inlet port has a specific, preferably unique, profile which enables it to receive replenishment chemical only from a container having a profile complementary to that of the inlet port. Thus if a supplier of replenishment chemical ensures that only one specific type or range of replenishment chemical is supplied in containers having a specific profile which is uniquely associated with that replenishment chemical, it is possible to ensure that a container can introduce into the liquid flow circuit only a replenishment chemical which is the same as or compatible with chemical previously introduced into the circuit via said inlet port.

Alternatively or additionally to a container and inlet port having complementary profiles which are uniquely associated with a type of chemical or range of chemicals, the container may incorporate communication means to recognise and respond to a signal from the monitoring device and thereby allow the monitoring device to cease to generate a continued warning signal and be re-set. That is, if a container is employed which has not necessarily been filled with a suitable type of replenishment chemical, the monitoring device may continue to provide a warning signal until an appropriate container has been employed and the sensor re-set.

The sensor for measuring the volume of flow of liquid, such as water, into the liquid flow circuit may be operable continually to monitor for flow of liquid or it may operate intermittently. The sensor may be operable normally at a low frequency, such as once per minute, but then to automatically switch to a higher or progressively increasing frequency of sampling if, when in the low frequency sampling but then automatically switch to a higher or progressively increasing frequency of monitoring if a flow is detected. The sensor may be mains powered, battery powered or of a type operable from wither a battery or mains supply.

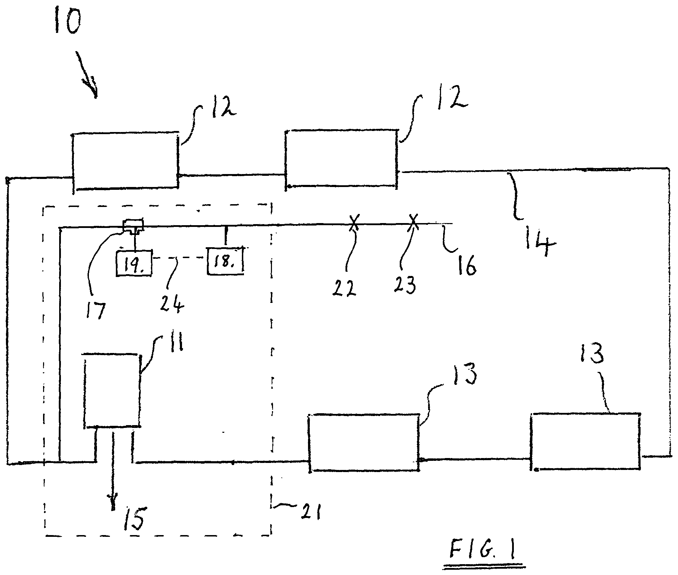

Embodiments of the present invention will now be described, by way of example only, with reference to the accompanying diagrammatic drawings in which:-
Figure 1 is a schematic view of a central heating system in accordance with the present invention, and
Figure 2 shows diagrammatically a commissioning protocol which may be employed for the central heating system of Figure 1.

A domestic central heating system 10 comprises a condensing boiler heat exchanger 11, two radiators 12 located at first floor level and two radiators 13 at ground floor level, said radiators and boiler being inter-connected in a closed loop pressurised circuit by pipe work 14. A valve 15 facilitates drainage of the system and a pressurised dosing device 18 facilitates addition of corrosion and lime scale inhibitor into the water contained within the circuit.

In proximity to the heat exchanger 11 there is a supply pipe 16 which is substantially permanently connected to a mains water supply and, via a pressure control valve 22 facilitates flow of water into the pipe work 14 of the liquid flow circuit of the system 10. Fitted to that pipe 16 is a T connector which houses a volume flow sensor 17 which is operable to measure the volume flow of water through the pipe 16. The volume flow sensor 17 is positioned downstream of the position at which the dosing device introduces inhibitor for the liquid flow circuit.

Associated with the sensor 17 is a display 19 which provides a visual display of the volume of water that has flowed through the pipe 16. The sensor and display form part of a management device that also comprises a data store and processing function whereby, in use, the volume flow information may be used to calculate the quantity of a chemical additive, whether a cleaning additive or inhibitor, that should be added to the water in the pipe work 14 via the dosing device 18. The required quantity is then indicated on the display 19.

The heat exchanger 11, the volume flow sensor 17 and the dosing device in the example of this embodiment of the invention are all provided integrally within a boiler casing 21.

In this embodiment of the invention the display 19 facilitates manual operation of the dosing device for introduction of cleaning fluid or inhibitor. However it is to be understood that the central heating system may be modified to incorporate one or more of the options aforedescribed, for example automatic operation of the dosing device via a connection 24 in response to a signal from a monitoring device comprising said sensor 17 and display 19, and/or provision of alarm signals also as aforedescribed, and/or automatic introduction of a leak sealer chemical or alarm to alert to the need for manual introduction of a leak sealer chemical.

Optionally the feed pipe 16 may incorporate a shut off valve 23 which operates automatically to prevent further flow of water into the pipe work 14 in the event that the sensor 17 has detected a high volume of flow at a time other than initial commissioning or flushing or cleaning of the system, and which therefore is indicative of a significant leakage or drainage of liquid from the pipe work 14.

optionally the system may incorporate, as a check on the concentration of chemical additive in the system, an on-line monitoring device such as that the subject of our UK patent GB 2462518.

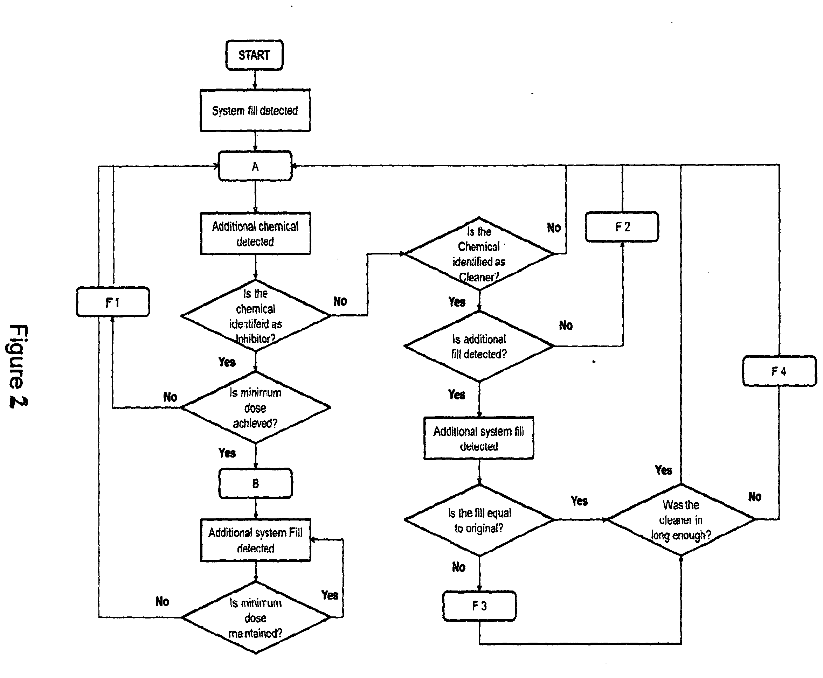

Whether for a central heating or cooling system the sensor 17 and display 19 may be part of a monitoring device which guides an operator through performing a cut of sequential actions to ensure correct commissioning of the system. An example of a suitable software algorithm, in particular one for a system which expects chemicals of a particular identity to be introduced into the liquid flow circuit, is shown in Figure 2. The display is operable to indicate any one of four different fault situations and also comprises two display positions, position A and position B which indicate respectively whether there is insufficient or sufficient inhibitor in the system. The fault 1 display is indicative of the inhibitor level being lower than the minimum required, fault 2 is indicative of a cleaner fluid not having been flushed, fault 3 is indicative of cleaner fluid having been insufficiently flushed and fault 4 is indicative of the cleaner not having been circulated through the system for sufficient time.

Accordingly by provision of a monitoring device which provides the aforementioned information the operator is guided through the correct commissioning procedure and the risk of incorrect or incomplete commissioning is reduced.

Although the invention has been described in relation to a domestic central heating system it may be employed also in respect of a cooling system.

Having regard to the foregoing it will be understood that the present invention facilitates a more reliable and accurate operation of a heat transfer system and which more readily facilitates introduction of additional top up chemical additive as and when required.

## Claims

1. A heat transfer system (10) comprising a liquid flow circuit (14) within which a liquid containing a chemical additive is circulated to flow through one or more heat transfer devices (12), said circuit (14) comprising a sensor (17) operable to provide an output signal in the event of a liquid flow into the liquid flow circuit, **characterized in that** said system comprises a volume flow display (19) to display the volume of liquid which has entered the liquid flow circuit (14), wherein said sensor (17) and display (19) are part of a monitoring device comprising also a data store to store information relating to the volume of liquid introduced into the liquid flow circuit (14) during initial commissioning thereof, and wherein the monitoring device (17,19) is operable to guide an operator through performing a set of sequential actions necessary to result in correct commissioning or re-filling of a heating or cooling system.

2. A system according to claim 1 **characterised in that** it is adapted for permanent or substantially permanent connection to a supply (16) of liquid for flow into the liquid flow circuit.

3. A system according to claim 1 or claim 2 **characterised in that** the sensor (17) is operable to provide an output signal which is a function of the volume of liquid flow into the liquid flow circuit.

4. A system according to any one of the preceding claims **characterised in that** the display (19) has associated therewith re-set means whereby following addition of liquid or chemical additive to the liquid flow circuit the display may be re-set thereby to display only the volume of liquid subsequently entering the liquid flow circuit.

5. A system according to any one of the preceding claims **characterised in that** the sensor (17) is in communication with, or adapted for communication (24)with a dosing device (18) which is operable to introduce chemical additive into the liquid flow circuit.

6. A system according to claim 5 **characterised in that** the dosing device (18) is operable automatically to introduce chemical additive into the liquid flow circuit (14) in response to a signal from the monitoring device.

7. A system according to any one of the preceding claims **characterised in that** the monitoring device (17,19) comprises a data store operable to record a history of operations undertaken in respect of flow of liquid into the liquid flow circuit and/or introduction of chemical additive.

8. A system according to any one of the preceding claims **characterised in that** the monitoring device (17,19) is operable to monitor the rate of addition of liquid into the liquid flow circuit per unit time thereby to identify a persistent leak of fluid from the system.

9. A system according to any one of the preceding claims **characterised in that** it comprises a dosing device (18) which is operable automatically to introduce required chemical additive into the liquid flow circuit (14) and wherein an alarm is generated in the event of the dosing device not containing any or containing only insufficient chemical additive needed to restore the concentration of additive to the required level of concentration.

10. A system according to any one of the preceding claims **characterised in that** it comprises a pressure monitor operable to initiate an alarm signal in the event of a significant loss of pressure in the liquid flow circuit.

11. A method of operation of a heat transfer system (10) of the type comprising a liquid flow circuit (14) within which there is circulated a liquid containing a chemical additive me metnoa comprising providing the system with a sensor (17) operable to provide an output signal in the event of a liquid flow into the liquid flow circuit,
**characterized by**
providing the system with a volume flow display (19) to display the volume of liquid which has entered the liquid flow circuit and by providing a monitoring device comprising said sensor (17) and display (19) and also a data store to store information relating to the volume of liquid introduced into the liquid flow circuit during initial commissioning thereof, the monitoring device (17,19) being operated to guide an operator through performing a set of sequential action necessary to result in correct commissioning or re-filling of a heating or cooling system.

12. A method according to claim 11 **characterised in that** the heat transfer (10) system is a heat transfer system according to any one of claims 1 to 10.

## Patentansprüche

1. Wärmeübertragungssystem (10), aufweisend einen Flüssigkeitsströmungskreislauf (14), in dem eine Flüssigkeit, die einen chemischen Zusatzstoff enthält, in Umlauf gebracht wird, um durch eine oder mehrere Wärmeübertragungsvorrichtungen (12) zu fließen, wobei der Kreislauf (14) einen Sensor (17) aufweist, der betätigbar ist, um ein Ausgabesignal bereitzustellen für den Fall einer Flüssigkeitsströmung in den Flüssigkeitsströmungskreislauf; **dadurch gekennzeichnet, dass** das System eine Volumenstromanzeige (19) aufweist, um das Flüssigkeitsvolumen anzuzeigen, das in den Flüssigkeitsströmungskreislauf (14) gelangt ist, wobei der Sensor (17) und die Anzeige (19) Teil einer Überwachungsvorrichtung sind, die auch einen Datenspeicher zum Speichern von Informationen aufweist, die sich auf das Flüssigkeitsvolumen beziehen, das während dessen erster Inbetriebnahme in den Flüssigkeitsströmungskreislauf (14) eingeführt wird, und wobei die Überwachungsvorrichtung (17, 19) betätigbar ist, um eine Bedienungsperson durch ein Ausführen eines Satzes von aufeinander folgenden Aktionen zu führen, die notwendig sind, um eine korrekte Inbetriebnahme oder Nachfüllung eines Wärme- oder Kühlsystems zu bewirken.

2. System nach Anspruch 1, **dadurch gekennzeichnet, dass** es für eine permanente oder im Wesentlichen permanente Verbindung mit einer Zufuhr (16) von Flüssigkeit zum Einströmen in den Flüssigkeitsströmungskreislauf angepasst ist.

3. System nach Anspruch 1 oder Anspruch 2, **dadurch gekennzeichnet, dass** der Sensor (17) betätigbar ist, um ein Ausgabesignal bereitzustellen, das eine Funktion des Volumens der Flüssigkeitsströmung in den Flüssigkeitsströmungskreislauf ist.

4. System nach einem der vorhergehenden Ansprüche, **dadurch gekennzeichnet, dass** der Anzeige (19) ein Rücksetzmittel zugehörig ist, mit dem nach dem Hinzufügen von Flüssigkeit oder chemischem Zusatzstoff zu dem Flüssigkeitsströmungskreislauf die Anzeige zurückgesetzt werden kann, um nur das Flüssigkeitsvolumen nach dem Eintritt in den Flüssigkeitsströmungskreislauf anzuzeigen.

5. System nach einem der vorhergehenden Ansprüche, **dadurch gekennzeichnet, dass** der Sensor (17) mit einer Dosiervorrichtung (18) in Verbindung steht oder zur Verbindung (24) mit dieser angepasst ist, die betätigbar ist, um chemischen Zusatzstoff in den Flüssigkeitsströmungskreislauf einzuführen.

6. System nach Anspruch 5, **dadurch gekennzeichnet, dass** die Dosiervorrichtung (18) automatisch betätigbar ist, um in Reaktion auf ein Signal von der Überwachungsvorrichtung chemischen Zusatzstoff in den Flüssigkeitsströmungskreislauf (14) einzuführen.

7. System nach einem der vorhergehenden Ansprüche, **dadurch gekennzeichnet, dass** die Überwachungsvorrichtung (17, 19) einen Datenspeicher aufweist, der betätigbar ist, um einen Verlauf von Vorgängen aufzuzeichnen, die hinsichtlich einer Flüssigkeitsströmung in den Flüssigkeitsströmungskreislauf und/oder Einführung von chemischem Zusatzstoff unternommen wurden.

8. System nach einem der vorhergehenden Ansprüche, **dadurch gekennzeichnet, dass** die Überwachungsvorrichtung (17, 19) betätigbar ist, um den Zufuhranteil von Flüssigkeit in den Flüssigkeitsströmungskreislauf pro Zeiteinheit zu überwachen, um dadurch ein anhaltendes Austreten von Fluid aus dem System zu ermitteln.

9. System nach einem der vorhergehenden Ansprüche, **dadurch gekennzeichnet, dass** es eine Dosiervorrichtung (18) aufweist, die automatisch betätigbar ist, um erforderlichen chemischen Zusatzstoff in den Flüssigkeitsströmungskreislauf (14) einzuführen, und wobei ein Alarm in dem Fall generiert wird, dass die Dosiervorrichtung keinen oder nur unzureichenden chemischen Zusatzstoff enthält, der benötigt wird, um die Konzentration von Zusatzstoff wieder auf das erforderliche Konzentrationsniveau herzustellen.

10. System nach einem der vorhergehenden Ansprüche, **dadurch gekennzeichnet, dass** es einen Druckwächter aufweist, der betätigbar ist, um ein Alarmsignal in dem Fall eines beträchtlichen Druckverlusts in dem Flüssigkeitsströmungskreislauf auszulösen.

11. Verfahren zum Betreiben eines Wärmeübertragungssystems (10) des Typs, der einen Flüssigkeitsströmungskreislauf (14) aufweist, in dem eine Flüssigkeit, die einen chemischen Zusatzstoff enthält, in Umlauf gebracht wird, wobei das Verfahren ein Bereitstellen einen Sensors (17) für das System aufweist, der betätigbar ist, um ein Ausgabesignal für den Fall einer Flüssigkeitsströmung in den Flüssigkeitsströmungskreislauf bereitzustellen,
**gekennzeichnet durch** ein Bereitstellen einer Volumenstromanzeige (19) für das System, um das Flüssigkeitsvolumen anzuzeigen, das in den Flüssigkeitsströmungskreislauf gelangt ist, und durch ein Bereitstellen einer Überwachungsvorrichtung, die den Sensor (17) und die Anzeige (19) und auch einen Datenspeicher zum Speichern von Informationen aufweist, die sich auf das Flüssigkeitsvolumen beziehen, das in den Flüssigkeitsströmungskreislauf während dessen erster Inbetriebnahme eingeführt wird, wobei die Überwachungsvorrichtung (17, 19) betätigbar ist, um eine Bedienungsperson durch ein Ausführen eines Satzes von aufeinander folgenden Aktionen zu führen, die notwendig sind, um eine korrekte Inbetriebnahme oder Nachfüllung eines Wärme- oder Kühlsystems zu bewirken.

12. Verfahren nach Anspruch 11, **dadurch gekennzeichnet, dass** das Wärmeübertragungssystem (10) ein Wärmeübertragungssystem nach einem der Ansprüche 1 bis 10 ist.

## Revendications

1. Système de transfert de chaleur (10) comprenant un circuit d'écoulement de liquide (14) à l'intérieur duquel circule un liquide contenant un additif chimique pour s'écouler à travers un ou plusieurs dispositifs de transfert de chaleur (12), ledit circuit (14) comprenant un capteur (17) servant à fournir un signal de sortie en cas d'écoulement de liquide dans le circuit d'écoulement de liquide, **caractérisé en ce que** ledit système comprend un dispositif d'affichage d'écoulement de volume (19) pour afficher le volume de liquide qui est entré dans le circuit d'écoulement de liquide (14), ledit capteur (17) et ledit dispositif d'affichage (19) faisant partie d'un dispositif de surveillance comprenant également une dispositif de stockage de données pour stocker des informations relatives au volume de liquide introduit dans le circuit d'écoulement de liquide (14) durant sa mise en service initiale, et ledit dispositif de surveillance (17, 19) servant à guider un opérateur à travers la réalisation d'un ensemble d'actions séquentielles nécessaires pour obtenir une mise en service ou un rechargement correct d'un système de chauffage ou de refroidissement.

2. Système selon la revendication 1, **caractérisé en ce qu'**il est adapté pour un raccordement permanent ou sensiblement permanent à une alimentation (16) en liquide permettant un écoulement dans le circuit d'écoulement de liquide.

3. Système selon la revendication 1 ou 2, **caractérisé en ce que** le capteur (17) sert à fournir un signal de sortie qui est fonction du volume d'écoulement de liquide dans le circuit d'écoulement de liquide.

4. Système selon l'une quelconque des revendications précédentes, **caractérisé en ce que** le dispositif d'affichage (19) comporte, associé à ce-dernier, des moyens de réinitialisation grâce auxquels, à la suite de l'ajout de liquide ou d'additif chimique au circuit d'écoulement de liquide, le dispositif d'affichage peut être réinitialisé pour ainsi afficher uniquement le volume de liquide entrant ensuite dans le circuit d'écoulement de liquide.

5. Système selon l'une quelconque des revendications précédentes, **caractérisé en ce que** le capteur (17) est en communication avec ou adapté pour une communication (24) avec un dispositif de dosage (18) servant à introduire un additif chimique dans le circuit d'écoulement de liquide.

6. Système selon la revendication 5, **caractérisé en ce que** le dispositif de dosage (18) sert automatiquement à introduire un additif chimique dans le circuit d'écoulement de liquide (14) en réponse à un signal provenant du dispositif de surveillance.

7. Système selon l'une quelconque des revendications précédentes, **caractérisé en ce que** le dispositif de surveillance (17, 19) comprend un dispositif de stockage de données servant à enregistrer un historique des opérations effectuées pour ce qui est de l'écoulement de liquide dans le circuit d'écoulement de liquide et/ou l'introduction d'additif chimique.

8. Système selon l'une quelconque des revendications précédentes, **caractérisé en ce que** le dispositif de surveillance (17, 19) sert à surveiller le débit de liquide ajouté dans le circuit d'écoulement de liquide par unité de temps pour ainsi identifier une fuite persistante de fluide du système.

9. Système selon l'une quelconque des revendications précédentes, **caractérisé en ce qu'**il comprend un dispositif de dosage (18) servant automatiquement à introduire l'additif chimique requis dans le circuit d'écoulement de liquide (14) et une alarme étant générée au cas où le dispositif de dosage ne contient aucun additif chimique nécessaire, ou en contient uniquement en quantité insuffisante, pour rétablir la concentration de l'additif au niveau de concentration requis.

10. Système selon l'une quelconque des revendications précédentes, **caractérisé en ce qu'**il comprend un dispositif de surveillance de pression servant à déclencher un signal d'alarme en cas de perte de pression considérable dans le circuit d'écoulement de liquide.

11. Procédé de fonctionnement d'un système de transfert de chaleur (10) du type comprenant un circuit d'écoulement de liquide (14) à l'intérieur duquel circule un liquide contenant un additif chimique, ledit procédé comprenant la dotation du système d'un capteur (17) servant à fournir un signal de sortie en cas d'écoulement de liquide dans le circuit d'écoulement de liquide, **caractérisé par** la dotation du système d'un dispositif d'affichage d'écoulement de volume (19) pour afficher le volume de liquide qui est entré dans le circuit d'écoulement de liquide et par la fourniture d'un dispositif de surveillance comprenant ledit capteur (17) et ledit dispositif d'affichage (19) ainsi qu'un dispositif de stockage de données pour stocker des informations relatives au volume de liquide introduit dans le circuit d'écoulement de liquide durant sa mise en service initiale, le dispositif de surveillance (17, 19) servant à guider un opérateur à travers la réalisation d'un ensemble d'actions séquentielles nécessaire pour obtenir la mise en service ou le remplissage correct d'un système de chauffage ou de refroidissement.

12. Procédé selon la revendication 11, **caractérisé en ce que** le système de transfert de chaleur (10) est un système de transfert de chaleur selon l'une quelconque des revendications 1 à 10.
